# EUROPÄISCHE PATENTSCHRIFT

(11) **EP 2 928 774 B1**
(45) Veröffentlichungstag und Bekanntmachung des Hinweises auf die Patenterteilung: **19.04.2017**
(21) Anmeldenummer: 13824291.2
(22) Anmeldetag: 02.12.2013
(51) Int. Cl.: B64D 33/02

(54) **EINLAUF FÜR EIN TRIEBWERK EINES LUFTFAHRZEUGS**
INTAKE FOR AN ENGINE OF AN AIRCRAFT
SYSTÈME D'ADMISSION DU GROUPE MOTOPROPULSEUR D'UN AÉRONEF

(30) Priorität: 05.12.2012 DE 102012023718
(43) Veröffentlichungstag der Anmeldung: 14.10.2015
(73) Patentinhaber: Airbus Defence and Space GmbH, 85521 Ottobrunn (DE)
(72) Erfinder: JUDAS, Michael, D-80331 München (DE); BICHLER, Bartholomäus, D-83064 Raubling (DE)
(74) Vertreter: Lorenz & Kopf PartG mbB Patentanwälte, LKGLOBAL
(86) Internationale Anmeldenummer: PCT/DE2013/000712
(87) Internationale Veröffentlichungsnummer: WO 2014/086329

(56) Entgegenhaltungen:
- WO-A1-02/12690
- DE-A1-102010 023 938
- GB-A- 2 149 017
- US-A- 4 354 346
- US-A- 4 713 934

## Beschreibung

### GEBIET DER ERFINDUNG

Die Erfindung betrifft einen Einlauf zum Zuführen von Luft zu einem Triebwerk und ein Luftfahrzeug.

### HINTERGRUND DER ERFINDUNG

Insbesondere beim Starten und Landen sowie bei einer niedrigen Flughöhe können Vögel mit einem Luftfahrzeug, wie etwa einem Flugzeug, kollidieren und das Luftfahrzeug beschädigen.

Bei diesem sogenannten Vogelschlag kann es zu Beschädigungen an den Triebwerken (wie etwa dem Bläser und/oder Verdichter) kommen, wenn der Vogel oder im Allgemeinen andere auf das Luftfahrzeug auftreffende Objekte in den Einlauf des Triebwerks geraten. Dies kann hohe Kosten für die Reparatur oder den Tausch des Triebwerks nach sich ziehen.

Eine Vorgehensweise ist, das Triebwerk für einen definierten Vogelschlag (d.h. ein auftreffendes Objekt mit maximalem Gewicht, maximaler Dichte usw.) auszulegen und zu testen. Dies kann bedeuten, dass das Triebwerk zwar beschädigt werden kann, während des Fluges aber trotz des Vogelschlags nicht ausfällt. Das Triebwerk kann mit verringerter Leistung bis zur sicheren Landung funktionieren.

Ein Einlauf eines Flugzeugtriebwerkes mit einem Sollbruchbereich ist aus WO02/12690 bekannt.

### ZUSAMMENFASSUNG DER ERFINDUNG

Es ist Aufgabe der Erfindung, ein Luftfahrzeug sicherer zu gestalten, wobei nur geringe Wartungskosten auftreten.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Ein Aspekt der Erfindung betrifft einen Einlauf zum Zuführen von Luft zu einem Triebwerk eines Luftfahrzeugs. Das Luftfahrzeug kann eine oder mehrere Turbinen umfassen, mit denen die Luft aus dem Einlauf verdichtet und wieder ausgestoßen wird, um das Luftfahrzeug anzutreiben.

Gemäß einer Ausführungsform der Erfindung umfasst der Einlauf eine Öffnung bzw. einen Eingang zum Ansaugen von Luft, die in Bewegungsrichtung des Luftfahrzeugs weist, und einen Luftkanal zwischen der (Außen-)Öffnung und dem Triebwerk, d.h. einem Ausgang des Luftkanals. Der Luftkanal ist derart gekrümmt, dass ein Aufschlagbereich in dem Luftkanal in Bezug auf die Bewegungsrichtung des Luftfahrzeugs hinter der Öffnung angeordnet ist, so dass ein in die Öffnung einfliegendes Objekt in der Regel auf den Aufschlagbereich trifft. Mit anderen Worten läuft der Luftkanal des Einlaufs nicht gerade auf das Triebwerk zu, sondern kann derart gekrümmt sein, dass beispielsweise keine direkte Sichtlinie zwischen der Öffnung des Einlaufs und dem Triebwerk bestehen muss.

Ein entlang der Bewegungsrichtung des Luftfahrzeugs in den Einlauf einfliegendes Objekt trifft in der Regel auf eine Innenwandung des Luftkanals (den Aufschlagbereich). Die Bewegungsrichtung kann eine Fortbewegungsrichtung des Luftfahrzeugs sein. Die Bewegungsrichtung kann im Wesentlichen einer Längsachse des Luftfahrzeugs entsprechen.

Gemäß der Erfindung weist der Aufschlagbereich einen Penetrationsbereich bzw. einen Sollbruchbereich oder Sollbruchstelle auf, der oder die dazu ausgeführt ist, von dem auftreffenden Objekt penetriert zu werden. Beispielsweise kann der Penetrationsbereich beim Auftreffen des einfliegenden Objekts zerstört bzw. stark verformt werden. Eine Penetrierung des Penetrationsbereichs kann dabei eine plastische Verformung des Penetrationsbereichs bedeuten. Der Penetrationsbereich kann ein Bauteil bzw. eine Anordnung von Bauteilen in der Innenwandung des Luftkanals und/oder hinter der Innenwandung sein, das bzw. die darauf ausgelegt ist, zu zerbrechen bzw. sich stark zu verformen, um zumindest einen Teil der Energie des auftreffenden Objekts aufzunehmen.

Das auftreffende Objekt kann in den Penetrationsbereich eindringen und/oder den Penetrationsbereich durchschlagen und vom Triebwerk weggelenkt werden. Damit kann verhindert werden, dass beispielsweise ein Vogel in das Triebwerk eindringt und größere Folgeschäden können vermieden werden. Da die Überreste des Vogels oder zumindest der große Teil dieser Überreste normalerweise nicht in das Triebwerk gelangen, ist das Risiko einer Beschädigung des Triebwerkes stark reduziert.

Der Penetrationsbereich bzw. das Bauteil oder die Bauteile bzw. deren Materialien können als Tauschteil ausgelegt sein, die nach dem Auftreffen des Objekts bei der Wartung kostengünstig ausgetauscht werden können. Durch das Einführen eines Penetrationsbereichs kann ein einfach zu tauschendes Bauteil beispielsweise von einem Vogel penetriert werden, so dass dieser nicht in den Einlaufkanal gelangt. So kann vermieden werden, dass der Vogel das in der Regel teure Triebwerk beschädigt. Das Luftfahrzeug bleibt in der Lage, den Flug fortzusetzen und sicher zu landen. Anschließend kann das vergleichsweise günstige Tauschteil gewechselt werden.

Auch ist es möglich, dass der Einlauf auftreffende Objekte mit hoher Einschlagenergie abfängt. Ein Luftfahrzeug kann auch vor schweren Vögeln geschützt werden. Auch bei hoher Geschwindigkeit kann ein Luftfahrzeug vor in den Einlauf eindringenden Objekten geschützt sein.

Gemäß der Erfindung steht zumindest ein Teil des Einlaufs vom Luftfahrzeug ab. Beispielsweise kann der Bereich des Einlaufs hinter der Öffnung muschelartig geformt sein. Der Penetrationsbereich kann im vom Luftfahrzeug abstehenden Teil des Einlaufs angeordnet sein.

Gemäß einer Ausführungsform der Erfindung wird der vom Luftfahrzeug abstehende Teil des Einlaufs beim Auftreffen des Objekts zumindest teilweise vom Luftfahrzeug abgetrennt. Auf diese Weise kann zwar die Leistung des Triebwerks reduziert werden, andererseits kann das Luftfahrzeug aber noch problemlos landen und eine Reparatur des Luftfahrzeugs ist durch einfaches Installieren eines kostengünstigen Ersatzteils möglich.

Gemäß einer Ausführungsform der Erfindung erstreckt sich der Penetrationsbereich von einer Innenwandung des Luftkanals bis zu einer Außenwandung des Einlaufs, so dass ein auf den Penetrationsbereich auftreffendes Objekt, den Penetrationsbereich (bei hinreichend großer Aufschlagenergie) durchdringt und das Luftfahrzeug verlässt. Das auftreffende Objekt kann vom Triebwerk abgelenkt werden, indem es beispielsweise einen vom Luftfahrzeug abstehenden Teil (geradlinig) durchdringt. Auch in diesem Fall kann zwar die Leistung des Triebwerks reduziert sein. Das Luftfahrzeug kann aber problemlos landen und kostengünstig repariert werden.

Gemäß einer Ausführungsform der Erfindung umfasst der Penetrationsbereich eine Kavität bzw. einen Hohlraum, in der oder dem das auf den Penetrationsbereich auftreffende Objekt gestoppt wird. Beispielsweise kann hinter einer Innenwandung, die dazu ausgeführt ist, beim Auftreffen eines Objekts zu bersten, eine Kavität angeordnet sein, in der das auftreffende Objekt aufgenommen wird.

Gemäß einer Ausführungsform der Erfindung umfasst der Penetrationsbereich ein Material, das eine Aufschlagenergie des auftreffenden Objekts zumindest teilweise aufnimmt. Dieses Material kann beispielsweise eine Innenwandung des Luftkanals sein, die dazu ausgeführt ist, beim Auftreffen des Objekts zu bersten. Beispielsweise kann das Material ein Kunststoff und/oder eine Leichtbaustruktur sein, während andere Bestandteile der Innenwandung aus Metall bestehen. Auch ist es möglich, dass das Material durch plastische Verformung die gesamte Bewegungsenergie des auftreffenden Objekts aufnehmen kann, beispielsweise ein Schaumstoff.

Gemäß einer Ausführungsform der Erfindung weist der Penetrationsbereich ein erstes Material auf, das dazu ausgeführt ist, einen ersten Teil einer Aufschlagenergie des auftreffenden Objekts aufzunehmen und ein zweites Material, das in Bezug auf die Bewegungsrichtung des Luftfahrzeugs hinter dem ersten Material angeordnet ist und das dazu ausgeführt ist, einen verbleibenden Teil der Aufschlagenergie aufzunehmen. Beispielsweise kann das erste Material ein leicht zerstörbarer Teil der Innenwandung des Luftkanals sein und das zweite Material ein Schaumstoff.

Gemäß einer Ausführungsform der Erfindung ist ein Material zum Aufnehmen einer Aufschlagenergie in einer Kavität angeordnet, die zum Stoppen des auftreffenden Objekts dient. Beispielsweise kann die Kavität mit diesem Material, beispielsweise Schaumstoff, ausgekleidet sein.

Gemäß einer Ausführungsform der Erfindung umfasst der Penetrationsbereich eine Klappe, die in einer geschlossenen Stellung einen Teil einer Innenwandung des Luftkanals bereitstellt. Die Klappe kann mittels in dem Penetrationsbereich angeordnetem Material in einer geöffneten Stellung gehalten werden.

Gemäß einer Ausführungsform der Erfindung ist die Klappe mittels eines Federmechanismus vorgespannt, so dass die Klappe nach einem Eindringen des auftreffenden Objekts in den Penetrationsbereich die Innenwandung des Luftkanals verschließt. Beispielsweise kann das auftreffende Objekt ein Material im Penetrationsbereich beiseite räumen, das die Klappe in der geöffneten Stellung hält, und so die Klappe freigeben. So kann auch nach dem Auftreffen des Objekts der Luftkanal seine Funktion ohne große Einschränkung weiter ausführen. Die Luft, die durch die Öffnung des Einlaufs strömt, kann weiterhin zum Triebwerk geleitet werden.

Gemäß einer Ausführungsform der Erfindung ist eine Oberfläche des Penetrationsbereichs im Luftkanal mit einem Radar absorbierenden Material versehen. Die Oberfläche, etwa die Oberfläche der Klappe oder die Oberfläche eines Materials der Innenwandung des Penetrationsbereichs, kann beispielsweise ein derartiges Material aufweisen oder damit beschichtet sein. Insbesondere kann ein Tauschteil des Penetrationsbereichs mit Radar absorbierenden Materialien hergestellt bzw. getarnt sein.

Gemäß einer Ausführungsform der Erfindung weist der Luftkanal in einer Umgebung des Penetrationsbereichs eine Krümmung um wenigstens 90° (beispielsweise bis zu 180°) auf. Der Luftkanal kann einen Einlaufkrümmer umfassen, in dem der Penetrationsbereich angeordnet ist. In diesem Einlaufkrümmer und auch in der (Außen-)Verkleidung können Sollbruchstellen installiert sein. Ein definierter Bereich am Einlaufkrümmer kann also so ausgelegt werden, dass beispielsweise ein Vogel die Innenwandung durchschlägt und erst gar nicht in den Bereich vor dem Triebwerk eindringt.

Ein weiterer Aspekt der Erfindung betrifft ein Luftfahrzeug, beispielsweise ein bemanntes oder unbemanntes Flugzeug oder eine Drohne. Das Luftfahrzeug kann ein getarntes Luftfahrzeug sein, das eine geringe Radarsignatur, eine geringe Infrarotsignatur und/oder geringe akustische Signatur aufweist. Das Luftfahrzeug kann ein Nurflügler sein.

Gemäß einer Ausführungsform der Erfindung umfasst das Luftfahrzeug wenigstens einen Einlauf, so wie er obenstehend und untenstehend beschrieben ist, und ein Triebwerk, das versetzt zu der Öffnung des Einlaufs angeordnet ist. Ein in den Einlauf einfliegendes Objekt trifft dabei auf den Penetrationsbereich, wird in der Regel aus dem Luftkanal des Einlaufs abgelenkt und kann nicht in das Triebwerk eindringen.

Es ist möglich, dass die Anforderungen an das Triebwerk hinsichtlich Vogelschlages reduziert werden. Auf diese Weise kann das Gewicht des Triebwerks reduziert werden. Während konventionelle Triebwerksauslegungen in der Regel auf einen maximalen Vogelschlag ausgelegt sind (der statistisch abgeleitet wird), kann mit der Sollbruchstelle sichergestellt werden, dass selbst schwere Vögel das Triebwerk nicht beschädigen.

Insbesondere für militärische Luftfahrzeuge, die in der Regel auch in einer niedrigen Flughöhe operieren, in der sich normalerweise die meisten Vögel befinden, können die von einem Vogelschlag ausgehenden Probleme vermindert werden.

Gemäß einer Ausführungsform der Erfindung ist das Triebwerk entgegen der Bewegungsrichtung des Luftfahrzeugs angeordnet. Durch eine umgekehrte Triebwerksintegration kann eine Radarsignatur des Luftfahrzeugs weiter reduziert werden als mit einem konventionell getarnten Einlauf.

Im Folgenden werden Ausführungsbeispiele der Erfindung mit Bezug auf die beiliegenden Figuren detailliert beschrieben.

### KURZE BESCHREIBUNG DER FIGUREN

Fig. 1 zeigt eine schematische Draufsicht auf ein Luftfahrzeug gemäß einer Ausführungsform der Erfindung.
Fig. 2 zeigt eine schematische Seitenansicht des Luftfahrzeugs aus der Fig. 1.
Fig. 3 zeigt eine schematische Ansicht von schräg oben auf das Luftfahrzeug aus der Fig. 1.
Fig. 4 zeigt eine schematische Ansicht von vorne auf das Luftfahrzeug aus der Fig. 1.
Fig. 5 zeigt eine schematische Seitenansicht eines Luftfahrzeugs gemäß einer Ausführungsform der Erfindung.
Fig. 6 zeigt eine schematische Draufsicht auf das Luftfahrzeug aus Fig. 5.
Fig. 7 zeigt eine schematische Seitenansicht eines Luftfahrzeugs gemäß einer Ausführungsform der Erfindung.
Fig. 8 zeigt eine schematische Draufsicht auf das Luftfahrzeug aus Fig. 7.
Fig. 9 zeigt einen schematischen Querschnitt durch einen Einlauf gemäß einer Ausführungsform der Erfindung.
Fig. 10 zeigt einen schematischen Querschnitt durch einen Einlauf gemäß einer Ausführungsform der Erfindung.
Fig. 11 zeigt einen schematischen Querschnitt durch einen Einlauf gemäß einer Ausführungsform der Erfindung.
Fig. 12 zeigt einen schematischen Querschnitt durch einen Einlauf aus der Fig. 11, nachdem sich eine Klappe geschlossen hat.
Fig. 13 zeigt einen schematischen Querschnitt durch einen Einlauf gemäß einer Ausführungsform der Erfindung.
Fig. 14 zeigt einen schematischen Querschnitt durch einen Einlauf aus der Fig. 13, nachdem sich eine Klappe geschlossen hat.

Grundsätzlich sind identische oder ähnliche Teile mit den gleichen Bezugszeichen versehen.

### DETAILLIERTE BESCHREIBUNG VON AUSFÜHRUNGSBEISPIELEN

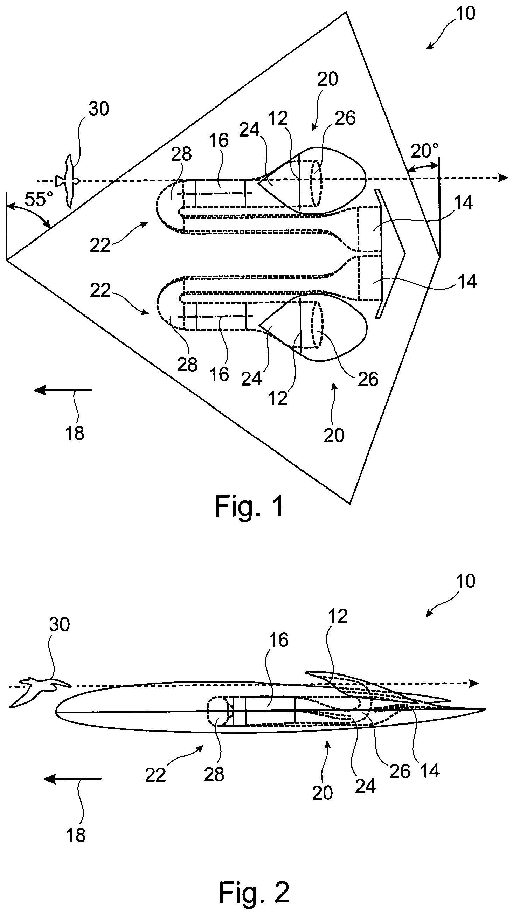

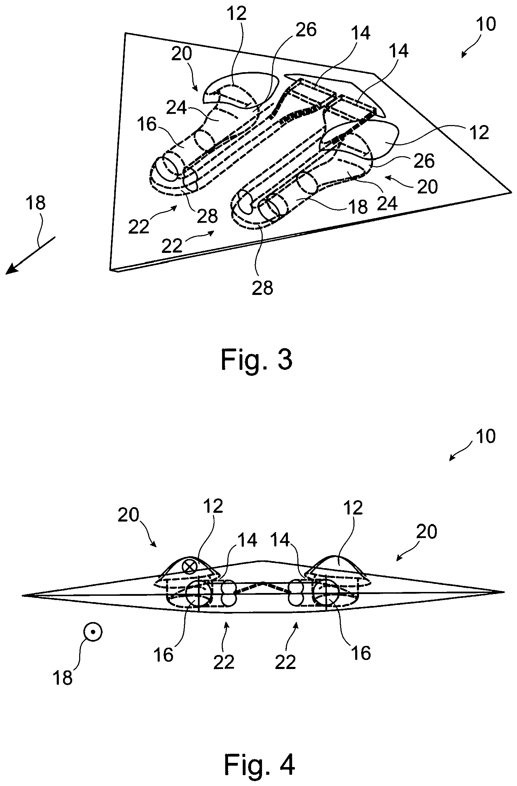

In den Fig. 1 bis 4 ist ein Luftfahrzeug 10 in der Form eines hoch getarnten Nurflüglers gezeigt.

Das Luftfahrzeug 10 weist eine im Wesentliche drachenartige, flache Form auf, bei der alle Triebwerksöffnungen (Einlauföffnung 12 sowie Auslassöffnung 14) auf einer Oberseite angeordnet sind.

Symmetrisch zu einer Mittelachse des Luftfahrzeugs 10 sind seitlich zwei Triebwerke 16 angeordnet, die entgegen der Bewegungsrichtung 18 des Luftfahrzeugs 10 angeordnet sind. Auch symmetrisch zur Mittelachse ist jedem Triebwerk 16 ein Einlauf 20 zugeordnet, mit dem Luft dem jeweiligen Triebwerk 16 zugeführt wird, und ein Auslass 22, über dem die von dem Triebwerk 16 verdichtete Luft nach hinten (entgegen der Bewegungsrichtung 18) ausgestoßen wird.

Die Luft strömt dabei in eine Einlauföffnung 12, die in Bewegungsrichtung 18 weist, und dann in einen Luftkanal 24, der zum Triebwerk 16 führt. Der Luftkanal 24 weist einen Bereich 26 mit einer Krümmung um 180° auf, die von oben nach unten (bezüglich einer normalen Fluglage des Luftfahrzeugs 10) verläuft.

Nach dem gekrümmten Bereich 26 mündet der Luftkanal 24 in das Triebwerk 16. Der Auslass 22 weist einen Bereich 28 mit einer Krümmung um 180° auf, die orthogonal zu der Krümmung des Bereichs 26 verläuft. Nach dem Bereich 28 mündet der Auslass 22 in die Auslassöffnung 14.

In den Fig. 1 und 2 ist ein Objekt 30 (ein Vogel) gezeigt, das entgegen der Bewegungsrichtung 18 des Luftfahrzeugs 10 in einen der Einläufe 20 einfliegt.

Das in den Fig. 1 bis 4 gezeigte Luftfahrzeug 10 weist einen Einlauf 20 oder zwei Einläufe 20 mit Penetrationsbereich auf, so wie er in den folgenden Figuren detaillierter beschrieben ist.

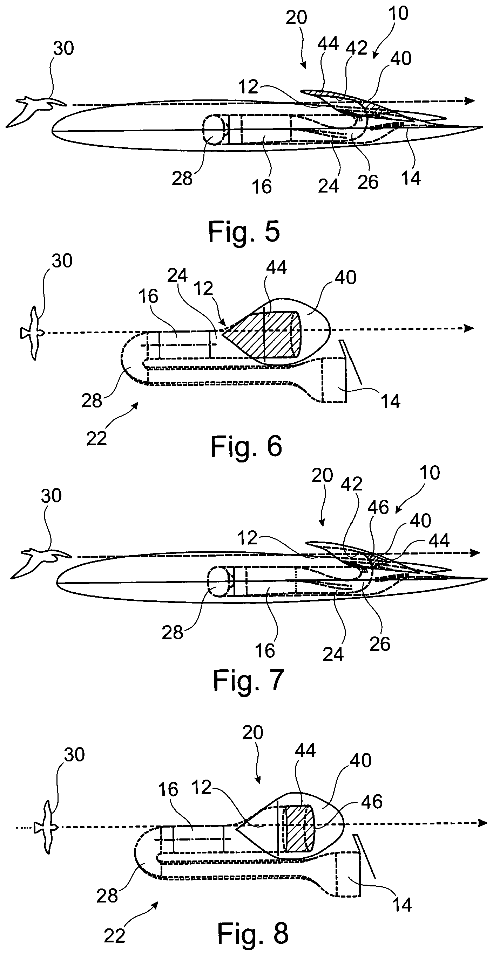

Die Fig. 5 und 6 zeigen, dass der Einlauf 20 einen muschelförmigen Teil 40 aufweisen kann, der von dem Luftfahrzeug 10 (nach oben) absteht. Wenn das Objekt 30 in den Einlauf 20 gerät, trifft es dabei auf eine Innenfläche des Teils 40, mit anderen Worten auf eine Aufschlagfläche bzw. einen Aufschlagbereich 42, der hinter der Öffnung 12 angeordnet ist. Der Aufschlagbereich liegt im Bereich 26 der Krümmung des Luftkanals 24.

Bei der Ausführungsform der Fig. 5 und 6 ist der gesamte vom Luftfahrzeug 10 abstehende Teil 40 als Penetrationsbereich 44 ausgeführt, d.h. besteht beispielsweise aus einem Material, das beim Auftreffen des Objekts 30 birst oder vom Luftfahrzeug 10 bzw. Einlauf 20 abreißt. Die Sollbruchstelle 44 kann die Verkleidung des Einlaufs 20 umfassen, die von dem Luftfahrzeug 10 absteht. Ein auf den Penetrationsbereich 44 auftreffendes Objekt 30 durchschlägt den Penetrationsbereich 44 und gerät somit nicht in das Triebwerk 16, da es das Luftfahrzeug 10 wieder verlässt.

Bei der Ausführungsform der Fig. 7 und 8 ist im vom Luftfahrzeug 10 abstehenden Teil 40 ein Penetrationsbereich 44 vorgesehen, der in eine Kavität 46 mündet. Auch der Penetrationsbereich 44 der Fig. 6 und 7 kann ein Material umfassen, das beim Auftreffen des Objekts 30 birst oder vom Luftfahrzeug 10 bzw. Einlauf 20 abreißt. Ein auf die Sollbruchstelle 44 auftreffendes Objekt 30 durchschlägt die Sollbruchstelle 44 und gerät somit nicht in das Triebwerk 16, da es in der Kavität 46 landet.

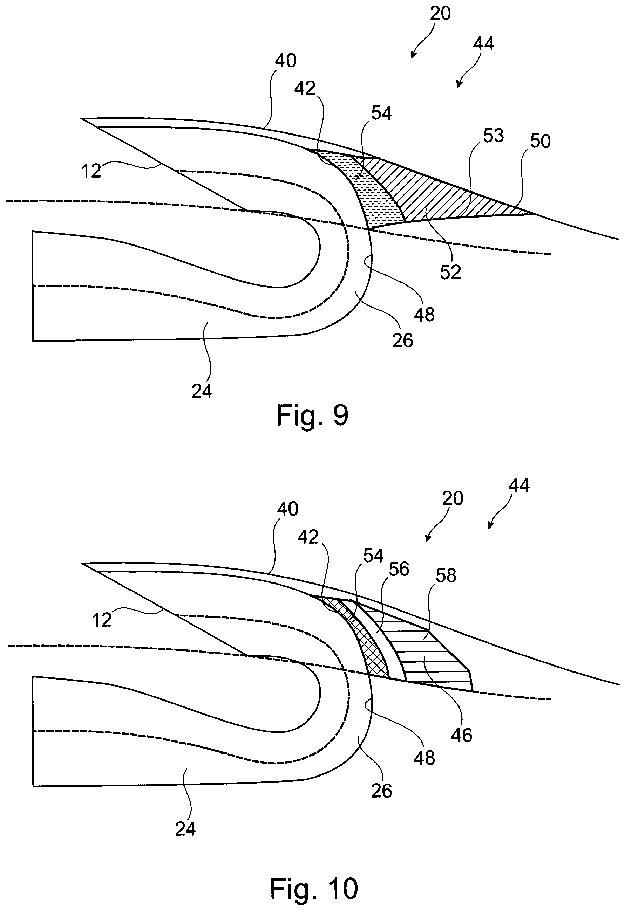

Die Fig. 9 zeigt einen Querschnitt durch einen Einlauf 20, bei dem der Penetrationsbereich 44 von einer Innenwandung 48 bis zu einer Außenwandung 50 des Einlaufs 20 (bzw. des abstehenden Teils 40) reicht. Der Penetrationsbereich 44 umfasst ein Material 52, das von einem Objekt 30 penetriert werden kann (beispielsweise ein leichtes Schaummaterial), und das auch einen Teil der Bewegungsenergie des Objekts 30 aufnehmen kann. Das Material 52 stellt einen Teil der Innenwandung 48 des Luftkanals 24 im Bereich der Krümmung 26 bereit und ist mit einem Radar absorbierenden Material 54 beschichtet. Weiter stellt das Material 52 einen Teil der Außenwandung 50 bereit.

Weiter zeigt die Fig. 9 einen Rampenabschnitt 53, der im Penetrationsbereich 44 angeordnet ist und der dazu dient, ein den Penetrationsbereich 44 durchdringendes bzw. durchfliegendes Objekt 30 in eine neue Richtung zu lenken, die beispielsweise von der Bewegungsrichtung 18 des Luftfahrzeugs 18 wegweist. Auf diese Weise kann das Objekt 30 von Bauteilen hinter dem Einlauf 20 weggelenkt werden.

Die Fig. 10 zeigt einen Querschnitt durch einen Einlauf 20, bei dem ein Penetrationsbereich einen Teil der Innenwandung 48 des Luftkanals 24 bereitstellt und in eine Kavität 46 mündet. Die Kavität 46 ist so ausgeführt, dass ein in die Kavität 46 einfliegendes Objekt 30 in der Kavität 46 verbleibt (und beispielsweise nicht deren Rückwand durchschlagen kann). In der Kavität ist ein erstes Material 56 angeordnet, das von einem Objekt 30 durchschlagen bzw. penetriert werden kann, und das als erster Aufschlagabsorber dient, beispielsweise einen ersten Teil der Bewegungsenergie des Objekts 30 aufnehmen kann. Hinter dem ersten Material 56 ist in der Kavität 46 ein zweites Material 58 angeordnet, das die verbleibende Bewegungsenergie des Objekts 30 aufnehmen kann.

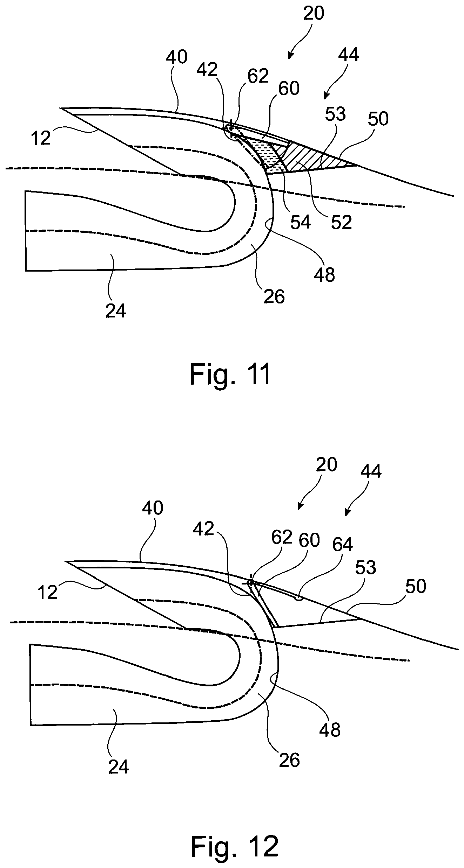

Die Fig. 11 und 12 zeigen einen Einlauf 20 analog der Fig. 9, der mit einer Klappe 60 ausgestattet ist.

Wie die Fig. 11 zeigt, wird die Klappe von dem Material 52, 54 in einer geöffneten Stellung gehalten. Die Klappe 60 weist einen Federmechanismus 62 auf, der derart vorgespannt ist, dass sich die Klappe 60 schließt, wenn ein Objekt 60 das Material 54, 52 durchdrungen und/oder beiseite geräumt hat (siehe Fig. 12). Wie in der Fig. 12 gezeigt ist, stellt die Klappe 60 in der geschlossenem Stellung einen Teil der Innenwandung 48 des Luftkanals 24 bereit.

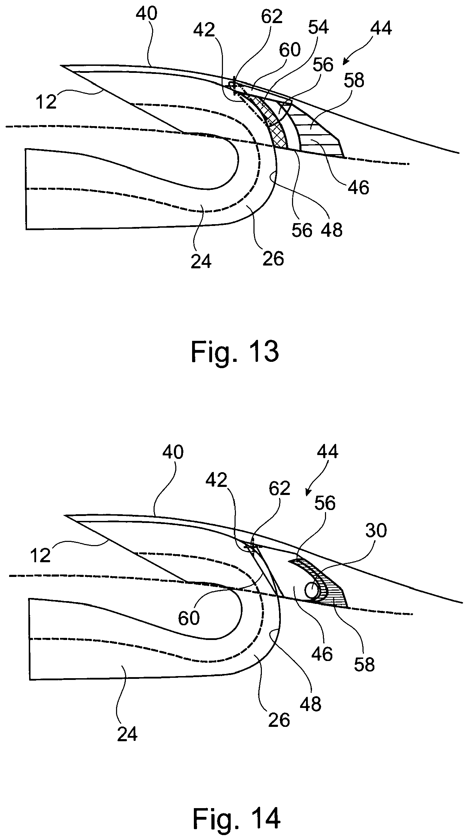

Die Fig. 13 und 14 zeigen einen Einlauf 20 analog der Fig. 10, der mit einer Klappe 60 analog den Fig. 11 und 12 ausgestattet ist. Die Fig. 13 zeigt, dass die Klappe durch das Material 54, 56, 58 in der geöffneten Stellung gehalten wird. Die Fig. 14 zeigt die Klappe 60 in der geschlossen Stellung, nachdem das Objekt 30 das Material 54, 56, 58 beiseite geräumt und verdichtet hat.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Einlauf (20) zum Zuführen von Luft zu einem Triebwerk (16) eines Luftfahrzeugs (10), umfassend:
eine Öffnung (12) zum Ansaugen von Luft, die in Bewegungsrichtung (18) des Luftfahrzeugs (10) weist; und
einen Luftkanal (24) zwischen der Öffnung (12) und dem Triebwerk (16), der derart gekrümmt ist, dass ein Aufschlagbereich (42) in dem Luftkanal (24) in Bezug auf die Bewegungsrichtung (18) des Luftfahrzeugs (10) hinter der Öffnung (12) angeordnet ist, so dass ein in die Öffnung (12) einfliegendes Objekt (30) auf den Aufschlagbereich (42) trifft;
wobei der Aufschlagbereich (42) einen Sollbruchbereich (44) aufweist, der in einem muschelförmig geformten Teil (40) des Einlaufs (20) angeordnet ist, **dadurch gekennzeichnet dass**,
der Sollbruchbereich vom Luftfahrzeug (10) absteht und dazu ausgeführt ist, beim Auftreffen eines Vogels als das Objekt (30) vom Einlauf (20) abgetrennt zu werden.

2. Einlauf (20) nach Anspruch 1,
wobei sich der Sollbruchbereich (44) von einer Innenwandung (48) des Luftkanals (24) bis zu einer Außenwandung (50) des Einlaufs (20) erstreckt, so dass ein auf den Sollbruchbereich (44) auftreffendes Objekt (30) den Sollbruchbereich (44) durchdringt und das Luftfahrzeug (10) verlässt.

3. Einlauf (20) nach Anspruch 1 oder 2,
wobei der Sollbruchbereich (44) eine Kavität (46) umfasst, in der das auf den Sollbruchbereich (44) auftreffende Objekt (30) gestoppt wird.

4. Einlauf (20) nach einem der vorhergehenden Ansprüche,
wobei der Sollbruchbereich (44) ein Material (52, 56, 58) umfasst, das eine Aufschlagenergie des auftreffenden Objekts (30) zumindest teilweise aufnimmt.

5. Einlauf (20) nach einem der vorhergehenden Ansprüche,
wobei der Sollbruchbereich (44) ein erstes Material (56) aufweist, das dazu ausgeführt ist, einen ersten Teil einer Aufschlagenergie des auftreffenden Objekts (30) aufzunehmen und ein zweites Material (58), das in Bezug auf die Bewegungsrichtung (18) des Luftfahrzeugs (10) hinter dem ersten Material (56) angeordnet ist, und das dazu ausgeführt ist, einen verbleibenden Teil der Aufschlagenergie aufzunehmen.

6. Einlauf (20) nach einem der vorhergehenden Ansprüche,
wobei ein Material (56, 58) zum Aufnehmen einer Aufschlagenergie in einer Kavität (46) angeordnet ist, die zum Stoppen des auftreffenden Objekts (30) dient.

7. Einlauf (20) nach einem der vorhergehenden Ansprüche,
wobei bei dem Sollbruchbereich (44) eine Ablenkrampe (53) angeordnet ist, die ein den Sollbruchbereich (44) in einer ersten Richtung penetrierendes Objekt (30) in eine andere Richtung ablenkt.

8. Einlauf (20) nach einem der vorhergehenden Ansprüche,
wobei der Sollbruchbereich (44) eine Klappe (60) umfasst, die in einer geschlossenen Stellung einen Teil einer Innenwandung (48) des Luftkanals (24) bereitstellt.

9. Einlauf nach Anspruch 8,
wobei die Klappe (60) mittels eines Federmechanismus (62) vorgespannt ist, so dass die Klappe (60) nach einem Eindringen des auftreffenden Objekts (30) in den Sollbruchbereich die Innenwandung (48) des Luftkanals (24) verschließt.

10. Einlauf (20) nach einem der vorhergehenden Ansprüche,
wobei eine Oberfläche des Sollbruchbereichs (44) im Luftkanal mit einem Radar absorbierenden Material (54) versehen ist.

11. Einlauf (20) nach einem der vorhergehenden Ansprüche,
wobei der Luftkanal (24) in einer Umgebung des Sollbruchbereichs (44) eine Krümmung um wenigstens 90° aufweist.

12. Luftfahrzeug (10), umfassend:
einen Einlauf (20) nach einem der vorhergehenden Ansprüche;
ein Triebwerk (16), das versetzt zu der Öffnung (12) des Einlaufs (20) angeordnet ist.

13. Luftfahrzeug (10) nach Anspruch 12,
wobei das Triebwerk (16) entgegen der Bewegungsrichtung des Luftfahrzeugs (10) angeordnet ist.

## Claims

1. An intake (20) for feeding air to an engine (16) of an aircraft (10), comprising:
an opening (12) for sucking in air, which opening points in the direction of movement (18) of the aircraft (10); and
an air duct (24) between the opening (12) and the engine (16), which air duct is curved in such a way that an impact region (42) is arranged in the air duct (24) after the opening (12) in relation to the direction of movement (18) of the aircraft (10), such that an object (30) flying into the opening (12) contacts the impact region (42);
wherein the impact region (42) has a predetermined breaking region (44), which is arranged in a shell-shaped part (40) of the intake (20),
**characterized in that** the predetermined breaking region (44) protrudes from the aircraft (10) and is designed to separate from the aircraft (10) upon impact of a bird as the object (30).

2. The intake (20) according to claim 1,
wherein the predetermined breaking region (44) extends from an inner wall (48) of the air duct (24) to an outer wall (50) of the intake (20), such that an object (30) contacting the predetermined breaking region (44) penetrates the predetermined breaking region (44) and leaves the aircraft (10).

3. The intake (20) according to claim 1 or 2,
wherein the predetermined breaking region (44) comprises a cavity (46), in which the object (30) contacting the predetermined breaking region (44) is stopped.

4. The intake (20) according to any of the preceding claims,
wherein the predetermined breaking region (44) comprises a material (52, 56, 58) that at least partially absorbs an impact energy of the impinging object (30).

5. The intake (20) according to any of the preceding claims,
wherein the predetermined breaking region (44) comprises a first material (56), which is designed to absorb a first part of an impact energy of the impinging object (30), and comprises a second material (58), which is arranged after the first material (56) in relation to the direction of movement (18) of the aircraft (10) and which is designed to absorb a remaining part of the impact energy.

6. The intake (20) according to any of the preceding claims,
wherein a material (56, 58) for absorbing an impact energy is arranged in a cavity (46) that serves to stop the impinging object (30).

7. The intake (20) according to any of the preceding claims,
wherein a deflection ramp (53) is arranged in the penetration region (44) and deflects an object (30) penetrating the predetermined breaking region (44) in a first direction in another direction.

8. The intake (20) according to any of the preceding claims,
wherein the predetermined breaking region (44) comprises a flap (60), which in a closed position provides part of an inner wall (48) of the air duct (24).

9. The intake according to claim 8,
wherein the flap (60) is preloaded by means of a spring mechanism (62), such that the flap (60) closes the inner wall (48) of the air duct (24) following a penetration of the impinging object (30) into the predetermined breaking region.

10. The intake (20) according to any of the preceding claims,
wherein a surface of the predetermined breaking region (44) in the air duct is provided with a radar-absorbing material (54).

11. The intake (20) as claimed in one of the preceding claims,
wherein the air duct (24) in a surrounding environment of the predetermined breaking region (44) has a curvature through at least 90°.

12. An aircraft (10), comprising:
an intake (20) according to any of the preceding claims;
an engine (16), which is arranged offset in relation to the opening (12) of the intake (20).

13. The aircraft (10) according to claim 12,
wherein the engine (16) is arranged against the direction of movement of the aircraft (10).

## Revendications

1. Système d'admission (20) destiné à alimenter de l'air dans un groupe motopropulseur (16) d'un aéronef (10), comprenant :
une ouverture (12) destinée à aspirer de l'air, qui est orientée dans la direction de déplacement (18) de l'aéronef (10) ; et
un canal d'air (24) entre l'ouverture (12) et le groupe motopropulseur (16), qui est incurvé de telle manière qu'une zone d'impact (42) est disposée dans le canal d'air (24) derrière l'ouverture (12) par rapport à la direction de déplacement (18) de l'aéronef (10), de telle sorte qu'un objet volant (30) pénétrant dans l'ouverture (12) heurte la zone d'impact (42) ;
la zone d'impact (42) comportant une zone destinée à la rupture (44), qui est disposée dans une partie en forme de coquille (40) du système d'admission (20),
**caractérisé en ce que**
la zone destinée à la rupture dépasse de l'aéronef (10) et est conçue pour être séparée du système d'admission (20) lors de l'impact d'un oiseau en tant qu'objet (30).

2. Système d'admission (20) selon la revendication 1,
dans lequel la zone destinée à la rupture (44) s'étend d'une paroi intérieure (48) du canal d'air (24) à une paroi extérieure (50) du système d'admission (20), de telle sorte qu'un objet (30) venant heurter la zone destinée à la rupture (44) traverse la zone destinée à la rupture (44) et quitte l'aéronef (10).

3. Système d'admission (20) selon la revendication 1 ou 2,
dans lequel la zone destinée à la rupture (44) comprend une cavité (46), dans laquelle l'objet (30) venant heurter la zone destinée à la rupture (44) est arrêté.

4. Système d'admission (20) selon l'une des revendications précédentes,
dans lequel la zone destinée à la rupture (44) comprend un matériau (52, 56, 58), qui absorbe au moins en partie une énergie d'impact de l'objet (30) incident.

5. Système d'admission (20) selon l'une des revendications précédentes,
dans lequel la zone destinée à la rupture (44) comporte un premier matériau (56), qui est conçu pour absorber une première partie d'une énergie d'impact de l'objet (30) incident et un second matériau (58), qui est disposé derrière le premier matériau (56) par rapport à la direction de déplacement (18) de l'aéronef (10), et qui est conçu pour absorber une partie restante de l'énergie d'impact.

6. Système d'admission (20) selon l'une des revendications précédentes,
dans lequel un matériau (56, 58) destiné à absorber une énergie d'impact est disposé dans une cavité (46), qui sert à arrêter l'objet (30) incident.

7. Système d'admission (20) selon l'une des revendications précédentes,
dans lequel une rampe de déviation (53) est disposée au niveau de la zone destinée à la rupture (44), qui dévie dans une autre direction un objet (30) qui pénètre dans la zone destinée à la rupture (44) dans une première direction.

8. Système d'admission (20) selon l'une des revendications précédentes,
dans lequel la zone destinée à la rupture (44) comprend un volet (60), qui, dans une position fermée, fournit une partie d'une paroi intérieure (48) du canal d'air (24).

9. Système d'admission selon la revendication 8,
dans lequel le volet (60) est précontraint au moyen d'un mécanisme à ressort (62), de telle sorte que le volet (60) ferme la paroi intérieure (48) du canal d'air (24) après une pénétration de l'objet (30) incident dans la zone destinée à la rupture.

10. Système d'admission (20) selon l'une des revendications précédentes,
dans lequel une surface de la zone destinée à la rupture (44) dans le canal d'air est pourvue d'un matériau absorbant les ondes radar (54).

11. Système d'admission (20) selon l'une des revendications précédentes,
dans lequel le canal d'air (24) comporte une courbure d'au moins 90° dans une zone entourant la zone destinée à la rupture (44).

12. Aéronef (10), comprenant :
un système d'admission (20) selon l'une des revendications précédentes,
un groupe motopropulseur (16), qui est disposé de manière décalée par rapport à l'ouverture (12) du système d'admission (20).

13. Aéronef (10) selon la revendication 12,
dans lequel le groupe motopropulseur (16) est disposé opposé à la direction de déplacement de l'aéronef (10).
